# EUROPÄISCHE PATENTSCHRIFT

(11) **EP 0 437 471 B1**
(45) Veröffentlichungstag und Bekanntmachung des Hinweises auf die Patenterteilung: **28.04.1993**
(21) Anmeldenummer: 89911052.2
(22) Anmeldetag: 30.09.1989
(51) Int. Cl.: F16D 25/063, F16D 55/40, F16D 65/54

(54) **REIBSCHEIBEN-NACHSTELLVORRICHTUNG**
ADJUSTING DEVICE FOR FRICTION DISKS
DISPOSITIF DE RATTRAPAGE DE JEU POUR DISQUES DE FRICTION

(30) Priorität: 07.10.1988 DE 3834175
(43) Veröffentlichungstag der Anmeldung: 24.07.1991
(73) Patentinhaber: ZF FRIEDRICHSHAFEN Aktiengesellschaft, 88038 Friedrichshafen (DE)
(72) Erfinder: SCHUSTER, Max, D-8390 Passau (DE); BIER, Waldemar, D-8390 Passau (DE)
(86) Internationale Anmeldenummer: EP8901149
(87) Internationale Veröffentlichungsnummer: WO9004115

(56) Entgegenhaltungen:
- EP-A- 0 066 765
- WO-A-87/03348
- DE-A- 2 652 060
- DE-A- 2 657 814
- FR-A- 2 343 930

## Beschreibung

Die Erfindung betrifft eine mechanische Nachstellvorrichtung für Betätigungskolben nach dem Oberbegriff des Anspruchs 1, wie sie für Bremsen beispielsweise bekannt ist aus der DE-A-26 52 060. Die dortige Einstellvorrichtung für hydraulisch betätigbare, sogenannte nasse Mehrscheibenbremsen mit einfach wirkendem großem Ringkolben ist insbesondere darauf gerichtet, das gelegentliche Austauschen der Reibkörper bzw. Klemmelemente zu erleichtern. Diese sind dazu am äußersten reibscheibenseitigen Ende der Mitnahmebolzen gegen dieselben innen klemmend aufgeschoben und werden von den Rückstellfedern gegen eine Distanzhülse gedrückt, die zwischen Bremskolben und einem denen angeschraubten Anschlagring angeordnet ist. Die Bohrungen im Innenkragen des Kolbens weisen dabei Radialspiel auf. Die Zahl der Rückstellfedern soll der Zahl der zugeordneten Einstellvorrichtungen entsprechen bzw. die Bolzen mit den Rückstell-Druckfedern konzentrisch und kombiniert zusammen angeordnet sein.
- Ungünstig ist es dabei, daß für die Klemmelemente nur wenig axialer Bauraum verfügbar ist und sie in unmittelbarer Nähe der Bremsen heiß werden können. Auch wenn diese Abrieb abwerfen, können sich leicht Klemmkraft-Störeinflüsse ergeben. Die Verschieblichkeit der einzelnen Klemmelemente kann am Umfang ungleichmäßig werden und die Bremse nicht mehr gleichmäßig bzw. zuverlässig greifen und schnell verschleißen.
- Die axiale Zwischenschaltung der Rückstellfedern zwischen Klemmelement und Kolben führt im Vergleich zu paralleler Anordnung von Federn und Nachstelleinrichtung zu einem erhöhten Baulängenbedarf.
- Bei schmalem Klemmelement sind auch dessen Haltekräfte gering, so daß auch nur eine geringe Federkraft anwendbar wird und man eine große Zahl von Nachstelleinrichtungen am Umfang benötigt, was bei kleinen Durchmessern der Bremsen Umfangs-Platzprobleme aufwirft.
- Wegen der Befestigung der Haltebolzen in der vom Kolben überdeckten Gehäusestirnwand, weitab von der Einschubbohrung für die Bolzen, ist eine Nachrüstung am Fahrzeug ohne Kolbendemontage erheblich erschwert.
- Wegen der Zusammenlegung mit den Rückstellfedern und wegen der zusätzlich erforderlichen Anschlagscheiben, Schrauben, Federn, Distanzhülsen usw., ist die Montage nicht einfach.
- Ungünstig ist es zudem, gleichviele Nachstellvorrichtungen, wie Rückstellfedern am Umfang anordnen zu müssen, weil sich bei relativ kleinen Bremsdurchmessern Unterbringungsprobleme ergeben. Mehrere separat angeordnete längere Rückstellfedern und z. B. nur drei, jedoch gleichmäßig verteilte Einstell- und Nachstellvorrichtungen auf dem Umfang können bei gleichem Durchmesser höhere Rückstellkräfte erlauben.
- Die genaue Einstellung und Beibehaltung des minimalen Bremslüftspieles ist insbesondere bei den mit relativ großen hilfskraftbetätigten Ringkolben zu aktivierenden Mehrscheibenbremsen, wie sie gemäß Stand der Technik bei in Öl laufenden Radnabenbremsen für Schwerstfahrzeuge zum Einsatz kommen, von Bedeutung. Zwar ist hier der Abrieb im Vergleich zu Trockenbremsen erheblich geringer, jedoch wirken sich. Schiefstellungen oder Verbiegungen der Reibscheiben nach vielen Betätigungen wegen der sich addierenden Lamellentoleranzen und der hohen Bremskräfte, wie sie z. B. bei hohen Differenzdrehzahlen zwischen Innen- und Außenlamellen nötig sind, leicht besonders ungünstig in bezug auf erhöhten Druckmittelbedarf im großen Ringzylinder aus.
   Da derselbe insbesondere bei Hilfskraftbetätigung nach eventuellem Ausfall der Druckmittelpumpe aus einem Druckbehälter noch mindestens 10mal pumpenlos für Vollbremsungen betriebssicher sein muß, steigen die Anforderungen an den Druckmittelvorrat und die entsprechende Dimensionierung des Leitungssystems etc. bei Inkaufnahme größer werdenden Lüftspieles schnell unnötig stark an. Weit höhere Drucksystem-Aufwendungen und Bauraum-Erfordernisse für das Drucksystem als bei zuverlässig gleichmäßig auf kleinstmögliches Lüftspiel begrenzten Kolbenhüben wären die Folge.
- Ungenauigkeiten im Bewegungsspiel des Ringkolbens und Undichtigkeiten können daher rühren, daß der Kolben, welcher in der Regel mit relativ weichen Dichtungsmanschetten versehen werden muß, sich infolge Eigengewicht und Vibration exzentrisch verlagert. Diese Gefahr darf nicht durch erwärmungsbedingte Verklemmungen an einzelnen Mitnahmebolzen bzw. Klemmelementen der Nachstelleinrichtung erhöht werden.
- Wenn eine nicht ohne weiteres demontable Gehäusestirnwand vorhanden ist, wird eine fakultative Nachrüstbarkeit des Bremsgehäuses mit einer Brems-Nachstellvorrichtung gemäß Ausgangsstand der Technik dadurch erschwert, daß das Gewinde des Bolzens in der vorm Kolben verdeckten Gehäusestirnwand vorgesehen ist. Ein totaler Fahrwerk-Umbau ist nachträglich kaum zu vermeiden, wenn Bremsnachsteller ursprünglich nicht gefordert waren.

Die Aufgabe der Erfindung wird hiervon ausgehend darin gesehen, eine sowohl für Mehrscheiben-Bremsen als auch -Kupplungen geeignete Betätigungskolben-Nachstellvorrichtung zu schaffen, die vorstehend aufgeführte Nachteile weitestgehend vermeidet und aus möglichst wenigen, leicht auch nachträglich ohne Gewindebohren in der Gehäusestirnwand montierbaren Teilen zusammengesetzt ist und auch bei heiß werdender Bremse ein exakt konzentrisch zur Reibscheiben-Achse fluchtendes Bewegungsspiel des Kolbens fördern und den Einbau der Klemmelemente in größerer axialer Entfernung von den Reibscheiben in wärme- und verschmutzungsgeschützter Position erlauben.

Die Lösung wird mit den kennzeichnenden Merkmalen des Anspruches 1 hauptsächlich dadurch erreicht, daß die Bolzen (parallel neben den Rückstellfedern) im Kolben befestigt sind, welcher zusammen mit der kompletten Nachstellvorrichtung bei sich getriebeseitig Öffnen lassenden Radkopfdeckel aus dem Gehäuse jederzeit, z. B. zwecks Erneuerung von Klemmelementen oder Dichtungen, leicht demontabel und auch bequem nachrüstbar ist, weil hier in der Gehäusestirnwand nur einfache Bohrungen notwendig bleiben. Die Haltebolzen benötigen dazu als Befestigung kolbenseitig lediglich eine Schweißung oder beidseits der Bohrung Sicherungsringe oder ein kurzes Gewinde etc. und im Bereich der Klemmelement-Befestigung lediglich eine einfache Umfangsnut im Bolzen, im übrigen aber in der Gehäusestirnwand nur einfache gewindelose Bohrungen. Dabei werden gehäuseseitig keine weiteren Anschlagflächen oder Distanzhülsen etc. gebraucht, und die Anbringung der Bolzen am Kolben ist bereits außerhalb des Gehäuses möglich, bevor dieser samt eingeschraubter Nachstelleinrichtung in das Gehäuse eingeschoben wird.
- Indessen ist erfindungsgemäß die Montage oder Demontage einzelner Bolzen auch nachträglich einfach, wenn eine Schlüssel-Ansatzmöglichkeit auf der bremsenseitigen Stirnseite der Bolzen vorgesehen ist.
- Eine Beeinträchtigung der Klemmwirkung durch Wärmeabstrahlung aus dem Bremsenbereich ist erfindungsgemäß weitestgehend unterbunden, weil sich hier die Klemmelemente weit abseits von der Anlagefläche des Kolbens an der Endlamelle der Bremse bzw. Kupplung innerhalb der noch durch den Ringkolben bremsenseitig überdeckten Bohrungen in der Gehäusestirnwand und innerhalb einer sie axial gegen Verschmutzung schützenden Umfangsnut des Mitnahmebolzens befinden.
- Aufgrund der festen Verbindung zwischen Bolzen und Kolben kann es zwischen diesen kaum zu temperaturdifferenzbedingten Schrägstellungen kommen und bieten die Bolzenführungen in den Bohrungen der Gehäusestirnwand so viel Spiel, daß eine eventuelle leichte exzentrische Verlagerung des Ringkolbens im Ringzylinder nicht zu unterschiedlicher Wirkung der Klemmelemente führt.
- Auch die unverlierbare Befestigung der Klemmelemente auf den Bolzen stellt eine Montageerleichterung dar.
- Ein die koaxiale Führung beeinträchtigendes Verlagern der die Bolzen führenden Bohrungen ist hier weit weniger zu erwarten, weil die Bohrungen in der massiven bremsenabgewandten Gehäusestirnwand und nicht in einer auf dem Kolben lösbar aufgeschraubten und relativ dünnwandigen Ringplatte vorgesehen sind.

Vorteilhafte Weiterbildungen der Erfindung sind in den Unteransprüchen beschrieben.
- Durch Verwendung eines kräftigen Schraubenkopfes am reibscheibenzugewandten Ende des Haltebolzens läßt sich derselbe per Steckschlüssel auch in einem längeren Bremsen- bzw. Kupplungs-Gehäuse günstig und zuverlässig befestigen.
- Durch entsprechend der Höhe des Schraubenkopfes erfolgende Zurückversetzung der Stirnfläche des Innenkragens gegenüber der Anlagefläche des Kolbens, entweder in Form von kreisförmigen Ausnehmungen oder Eindrehungen im Bereich der Anlagefläche, bleibt auch die Befestigung der Bolzen außerhalb des unmittelbaren Erwärmungsbereiches an den Reibscheiben.
- Dadurch daß die Klemmelemente aus quergeschlitzten, von der Seite her auf den Bolzen aufgeschobenen Ringen mit sichelförmigem Grundriß bestehen, bei denen die offene Ringbogenstrecke mindestens dem Bolzendurchmesser im Nutengrund der Umfangsnut entspricht, ist eine radiale Montage der Klemmelemente in der Umfangsnut ohne axiale Unterteilung des Bolzens und ohne jede weitere Anschlagsflächen-Justage möglich.
- Wird die Umfangsnut jedoch durch einen Haltebolzen gebildet, der in der von der Bremse abgewandten Seite her mit begrenztem Abstand zum Schaftanfang des eigentlichen Bolzens eine Kopfschraube eingesetzt hat, so könnte das Lüftspiel durch unterschiedlich lange Kopfschrauben und verändert weites Einschrauben und Sichern derselben auch nachträglich leicht geändert werden, ohne dafür gänzlich neue Bolzen anschaffen zu müssen.
- Das axiale Einstecken der Klemmelemente in die Bohrung der Gehäusestirnwand kann mittels sich auf den Außendurchmesser der Klemmelemente im ungespreizten Zustand erweiternder bremsenseitiger Konusöffnungen in der Gehäusestirnwand deutlich erleichtert werden, weil damit das radiale Zusammenpressen ohne Werkzeug beim Einfahren des Kolbens erfolgt.
- Dank der Unabhängigkeit der Konstruktion der Nachstelleinrichtungen von den Abmessungen und Anordnungen der Rückstellfedern ist es möglich, entweder deren Abmessungen oder Anzahl bzw. auch Verteilung auf dem Umfang je nach Bedarf zu verändern und dabei zu vermeiden, daß die axialen Bauraumerfordernisse der Rückstellfedern eine größere bzw. zusätzliche Länge der Haltebolzen und des Ringkolbens insgesamt erforderlich machen.
- In Fällen, wo die Gehäusestirnwand gleichzeitig ein an einem feststehenden Achsgehäuse befestigter Hohlradträger ist, auf welchem das die Außenbremsscheiben drehfest haltende Hohlrad aufgelegt ist, ist es noch günstig, daß bei den erfindungsgemäß möglichen kurzen Haltebolzen und Ringkolben letzterer samt Nachstellvorrichtungen ziemlich genau radial fluchtend mit der Hohlradbefestigung auf dem Hohlradträger und der Befestigung desselben an einem Achsgehäuse innerhalb einer vom Hohlradträger bzw. der Gehäusestirnwand gebildeten Ringvertiefung unter axialer Bauraumersparnis untergebracht werden kann.

Die Erfindung wird im folgenden anhand schematischer Zeichnungen eines Beispieles näher erläutert:
- Fig. 1: ist ein Längsschnitt durch den prinzipiellen Aufbau einer Mehrscheibenbremse bzw. -kupplung mit einer Nachstellvorrichtung gemäß der Erfindung;
- Fig. 2: zeigt die Rückansicht des Ringkolbens bei drei Nachstellvorrichtungen am Umfang und dazu winkelversetzten zahlreicheren (neun) Federn;
- Fig. 2A: zeigt einen Längsschnitt durch eine Rückstellfeder-Anordnung mit Einhängung an Tragringen.
- Fig. 3: zeigt ein vergrößertes Detail der Klemmelementanordnung im Bereich der Gehäusestirnwand innerhalb einer Bolzennut;
- Fig. 3A: ist ein Teilschnitt durch die Bolzenführung in der Gehäusestirnwand mit der Vorderansicht eines sichelförmigen Klemmelementes.

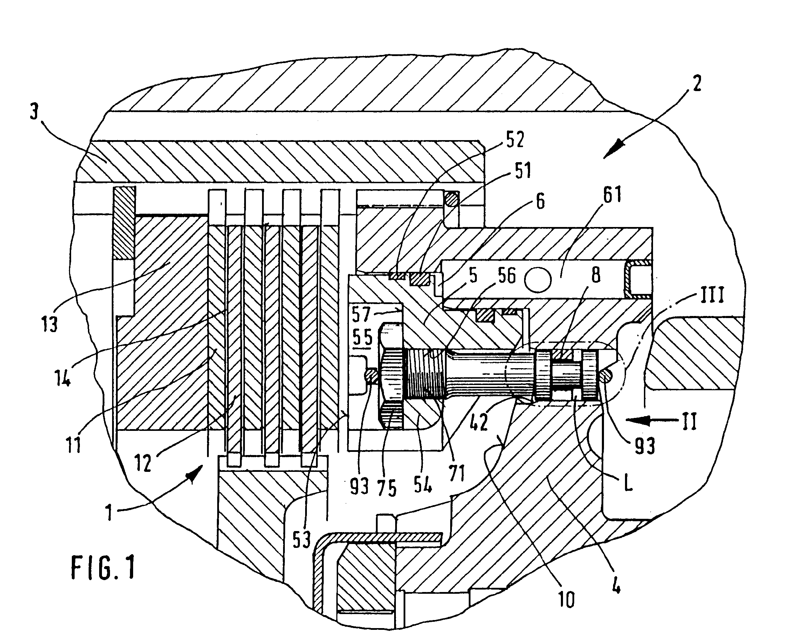

In Fig. 1 sind mehrere Reibscheiben 1 zu einem Lamellenpaket zusammengefaßt, bei dem mehrere Außenlamellen 11 mit dazu relativ drehenden Innenlamellen 12 kämmen. Auf der kolbenabgewandten Seite des Lamellenpaketes ist eine Anlageplatte 13 axial fest angeordnet. Die Außen- und Innenlamellen 11, 12 sind im Beispiel durch Eingriffe in Verzahnungen drehfest, jedoch derart axial verschieblich geführt, daß im unbelasteten Zustand eine Reibscheibendistanz 14 zwischen allen zueinander relativ drehenden Reibflächen 11, 12 zustande kommt, die im drucklosen Zustand weiteres Bremsen weitestgehend vermeidet.

Im Beispiel sind die Außenlamellen 11 in der Innenverzahnung eines hier als Hohlrad ausgebildeten Gehäuses 3 festgehalten, welches zu einer nicht näher gezeigten Welle, die die Innenlamellen 12 antreibt, durch eine z. B. als Hohlradträger ausgebildete Gehäusestirnwand 4 koaxial gehalten ist. Diese Gehäusestirnwand 4 ist in etwa halber radialer Höhe mit Bohrungen 41 parallel zur Hauptachse und senkrecht zu den Reibscheiben 1 versehen. Diese Bohrung 41 kann zur Montageerleichterung auf der reibscheibenzugewandten Seite eine konusartige Durchmesser-Erweiterung 42 haben oder die reibscheibenabgewandten Kanten ihrer Einsätze erhalten eine Montagefase.

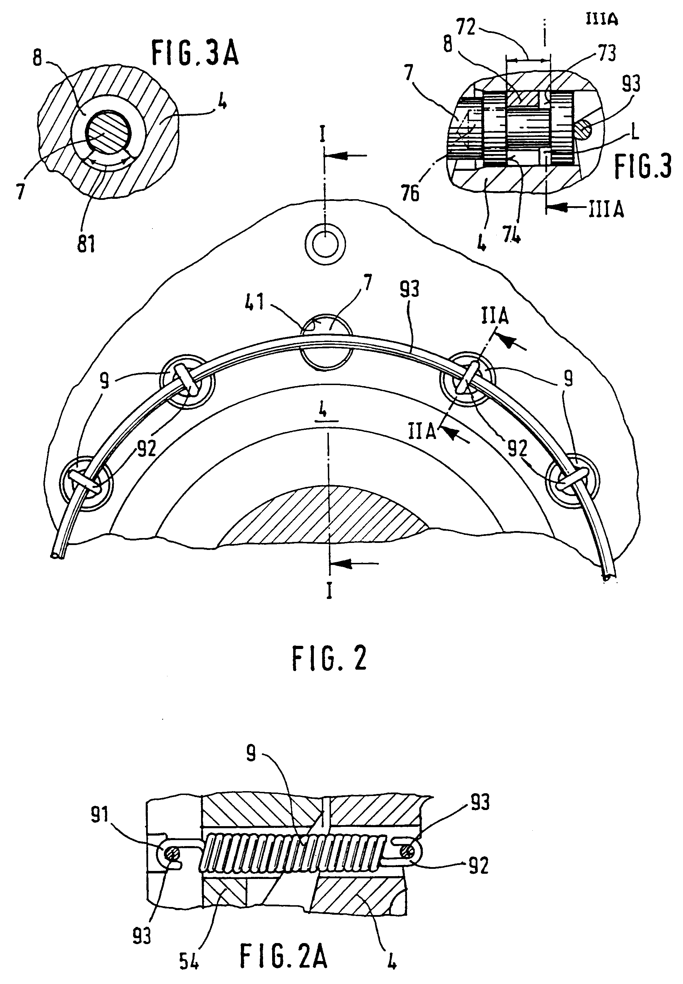

Axial zwischen der Gehäusestirnwand 4 und der dieser nächstgelegenen Außenlamelle 11 ist der axial verschiebliche Ringkolben 5 angeordnet. An seinem Außenumfang wird er umschlossen von zwei zueinander axial und radial beabstandeten Kolbenmanschetten 51, welchen hier zur besseren radialen Zentrierung Distanzringe 52 aus festerem Gleitwerkstoff zugeordnet sind. Reibscheibenseitig hat der Ringkolben 5 eine Anlagefläche 53, welche einen großen Teil der zu beaufschlagenden Reibfläche radial überdeckt. Dies ist möglich, weil der Kolben 5 durch einen Innenkragen 54 radial verbreitert ist. Damit wird auf der Anlagefläche 53 auch Platz geschaffen für Axialausnehmungen 55, in denen Bohrungen 56, die mit den Bohrungen 41 in der Gehäusestirnwand 4 koaxial zu liegen kommen, vorgesehen sind. Die reibscheibenseitige Innenfläche 57 der Axialausnehmung 55 kommt im Beispiel etwa in die Mitte des Innenkragens 54 zu liegen. Der von den Kolbenmanschetten 51 am Außenumfang des Ringkolbens 5 gebildete Ringzylinder 6 wird über eine die Gehäusestirnwand 4 durchdringende Druckmittelleitung 61 gespeist. In die Bohrungen 56 und 41 ist, wie auch die Ausschnittvergrößerung nach Fig. 3 zeigt, ein Haltebolzen 7 eingesteckt, welcher im Innenkragen 54 in diesem Beispiel eine spielfreie Befestigung 71 z. B. mittels Schweißung oder eines Gewindes oder beidseits anliegender Sicherungsringe oder ähnlichem aufweist. Im Bereich der Bohrung 41 in der Gehäusewand 4 weist der Bolzen 7 ein größeres Radialspiel auf als das des Kolbens 5 und ist hier mit einer Umfangsnut 72 versehen, deren Stirnflächen bei Axialbewegung des Bolzens 7 gegenüber einem Klemmelement 8 als äußere und innere Anschlagsflächen 73, 74, dienen, welches in die Umfangsnut 72 unter Außenspreizung in der Bohrung 41 mit einem Soll-Lüftspiel L eingepaßt ist. Beim Einführen in die Bohrung 41 und radialen Zusammenpressen der Klemmelemente 8 hilft die konusförmige Erweiterung 42 der Bohrung 41. Das Klemmelement 8 besteht im Beispiel gemäß Fig. 3A aus einem oder mehreren sich im ungespannten Zustand weiter als die Bohrung 41 aufspreizenden Spannringen mit einer offenen Ringstrecke 81, welche ausreicht, um unter Aufspreizung über den Außendurchmesser des Bolzens 7 im Bereich der Umfangsnut 72 zu passen und um das Klemmelement 8 beim Einbauen auf den Kreisringquerschnitt der Bohrung 81 vorzuspannen.

Zur Erleichterung der Montage der Bolzen 7 nach erfolgtem Gehäusezusammenbau kann vor der reibscheibenseitigen Innenfläche 57 der axialen Ausnehmung 55 des Ringkolbens 5 der Bolzen 7 mit einem normalen Schraubenkopf 75 und direkt anschließend ein Gewinde vorgesehen sein. Die Unterkante des Schraubenkopfes 75 preßt sich bei Befestigung so gegen die Innenfläche 57, daß keine unbeabsichtigte Lockerung zu befürchten ist.

Auch ist es möglich, zwecks Einstellbarkeit des Lüftspieles L ohne Änderung des Bolzens 7, die Umfangsnut 72 dadurch zu bilden, daß in den Schaft des Bolzens 7 von der kolbenabgewandten Seite her eine Kopfschraube 76 (gestrichelte Kontur in 7) gerade soweit eingeschraubt wird, daß sich die axiale Breite der Umfangsnut 72 zwischen dem anschlagseitigen Schaftende des Kolbens 5 mit der Anschlagfläche 73 und der Unterseite des Kopfes dieser Kopfschraube 76 allein durch kürzeres oder längeres Einschrauben derselben variieren läßt.

Wie auch aus Fig. 2 ersichtlich, sind am Umfang des Kolbens 5 winkelversetzt zu den Nachstellvorrichtungen zahlenmäßig weniger Bolzen 3, jedoch weitaus mehr Rückstellfedern 9 verteilt angeordnet, was höhere Rückstellkräfte erlaubt und zur Verwendbarkeit kurzbauender Zugfedern führt, deren axiale Maßtoleranzen hiernach nur noch geringe Einflüsse auf das Bremsverhalten ergeben. Die reibscheibenseitige Einhängung 91 der Federn 9 ist im Beispiel etwas axial von der Anlagefläche 53 des Ringkolbens 5 zurückversetzt am Innenkragen 54 und deren kolbenabgewandte Einhängung 92 auf der Außenseite der Gehäusestirnwand 4 gemäß Fig. 2A in je einem Tragring 93 über den Bohrungen 56 und 41 vorgesehen. Eine etwa halbkreisförmige Ringvertiefung 10, mit welcher die Gehäusestirnwand 4 den Ringkolben 5 mit Ausnahme der Anlagefläche 53 außen umschließt, ermöglicht eine platzsparende Einbeziehung desselben unter axialer Überdeckung der nicht gesondert bezeichneten bzw. dargestellten Befestigungen des Hohlrades 3 an der Gehäusestirnwand 4 sowie dem kolbenseitigen Ende eines die Gehäusestirnwand 4 tragenden Achsrohres in der Fig. 1 radial unterhalb des Kolbens 5.

Die Funktion der erfindungsgemäßen Nachstelleinrichtung beruht in an sich prinzipiell bekannter Weise darauf, daß schon bei der ersten Bremsbetätigung der Ringkolben 5 die Bolzen 7 und diese mit ihrer äußeren Anschlagfläche 74 das Klemmelement 8 in Richtung Reibscheiben 1 bis in eine der jeweils möglichen Maximalzusammenpressung des Lamellenpaketes entsprechende individuelle Endlage mitnimmt. Wird der Kolben 5 nach Wegfall des Druckmitteldruckes in der Zuleitung 61 zum Hydraulikzylinder 6 infolge der Zugkraft der Rückstellfedern 9 sodann wieder aus der Anlage gegenüber der nächstliegenden Außenbremsscheibe 11 in Richtung Gehäusestirnwand 4 zurückgezogen, so ist dies dank der Haltekräfte der Klemmelemente 8 nur so weit möglich, bis es zum Anlaufen der inneren Anschlagsflächen 74 an den Klemmelementen 8 kommt. Diese sind derart in der Bohrung 41 festgeklemmt, daß es den Kräften aller Rückstellfedern 9 nicht gelingt, sie aus ihrer axialen Lage zu verschieben. Erst bei neuer Betätigung des Ringkolbens 5 wird eine Neupositionierung der Klemmelemente 8 möglich, sofern der Kolben 5 dann einen größeren axialen Weg in Richtung der Reibscheiben 1 machen kann. Dies wäre beispielsweise bei Reibflächenabnutzung oder flacher gewordenen gewellten Lamellen der Fall.

Das die Kolbenrückstellung allein durch Federkraft erlaubende und konstant gehaltene Lüftspiel L wird mindestens so groß gewählt, daß es der Summe aller Reibscheibendistanzen 14 für deren reibungsfreien Umlauf entspricht. Die Umfangsnut 72 hat demzufolge eine Breite, die um das Soll-Lüftspiel L größer ist als die axiale Länge des Klemmelementes 8 für einen Mitnahmebolzen 7.

Dadurch, daß sich bei einer Erstbetätigung alle Klemmelemente 8 am Umfang individuell auf gleiche Kolbenpreßlage justieren, wird eine bleibend exakte axiale und radiale Führung des Kolbens mit relativ kleinem Umfangsspiel der Haltebolzen 7 in der Bohrung 41 bzw. gegenüber den zugeordneten Klemmelementen 8 erreicht. Eine zuverlässige, verschleißverhütende und energiesparende Bremsbetätigung ist daher hiermit auf Dauer unter niedrigen Druckmitteldrücken und mit geringen Ölvolumina möglich. Besondere Vorkehrungen für veränderlichen Druck- bzw. Volumen-Bedarf müssen nicht getroffen werden.

### Bezugszeichen

- 1: Reibscheiben
- 11: Außenreibscheiben
- 12: Innenreibscheiben
- 13: Anlageplatte
- 14: Scheibendistanz
- 2: Gehäuse
- 3: Hohlrad
- 4: Gehäusestirnwand (Hohlradträger)
- 41: Bohrung in 4
- 42: Erweiterungskonus an 41
- 5: Ringkolben
- 51: Kolbenmanschetten
- 52: Distanzringe
- 53: Anlagefläche
- 54: Innenkragen
- 55: Axialausnehmung
- 56: Bohrung
- 57: Innenfläche reibscheibenseitig
- 6: Ringzylinder
- 61: Druckmittelzuleitung
- 7: Haltebolzen
- 71: Befestigung in 54
- 72: Umfangsnut
- 73: Anschlagsfläche außen
- 74: Anschlagsfläche innen
- 75: Schraubenkopf
- 76: Kopfschraube
- 8: Klemmelement
- 81: offene Ringbogenstrecke
- 9: Rückstellfeder
- 91: kolbenseitige Einhängung
- 92: kolbenabgewandte Einhängung
- 93: Tragringe
- 10: Ringvertiefung mit Halbkreisquerschnitt

## Patentansprüche

1. Nachstellvorrichtung für Betätigungskolben
- hydraulisch betätigbarer und naßlaufender Mehrscheibenbremsen bzw. -kupplungen,
- mit einem Brems- bzw. Kupplungsgehäuse (2) und darin konzentrisch zur Achse von Reibscheiben (1) geführtem Ringkolben (5),
- welcher unter Bildung eines Ringzylinders (6) axial zwischen einer Gehäusestirnwand (4) und den Reibscheiben (1) angeordnet ist,
- wobei der Ringkolben (5) radial verbreitert ist durch einen Innenkragen (54),
- und in Bohrungen (56) von Haltebolzen (7) axial durchdrungen wird,
- welche bis in Bohrungen (41) in der Gehäusestirnwand (4) hineinreichen und mit Klemmelementen (8) zusammenwirken,
- die dem Ringkolben (5) durch einen axialen Reibschluß zu den Haltebolzen (7) unter Zuordnung zweier axial beabstandeter Anschlagsflächen (73, 74) nur ein konstantes Soll-Lüftspiel (L) nach einer Brems- bzw. Kupplungsbetätigung freigeben, unabhängig davon, welchen Wert die effecktive Summe der Dicken aller Reibscheiben (1) jeweils aufweist,
- wobei die gemeinsame Federkraft von in Richtung der Gehäusestirnwand (4) wirkenden Rückstellfedern (9) geringer als die gemeinsame Haltekraft der Klemmelemente (8) gegenüber dem Gehäuse (2) ist,
dadurch **gekennzeichnet,**
- daß die Haltebolzen (7) mit ihrem reibscheibenzugewandten Ende am Innenkragen (54) des Ringkolbens (5) axialstarr befestigt sind,
- daß die Haltebolzen (7) mit ihrem reibscheibenabgewandten Ende zur jeweiligen Bohrung (41) in der Gehäusestirnwand (4) ein allseitiges Umfangsspiel aufweisen, das größer als das radiale Kolbenspiel ist und
- daß das bzw. die Klemmelemente (8) in der Gehäusestirnwand (4) mit Außenspreizung gegen die Innenwand der jeweiligen Bohrung (41) im Bereich zwischen zwei entgegengerichteten Anschlagsflächen (73, 74) auf dem jeweiligen Haltebolzen (7) angeordnet sind.

2. Vorrichtung nach Anspruch 1, dadurch **gekennzeichnet**, daß eine reibscheibenseitige Stirnfläche (57) des Innenkragens (54) von einer Anlagefläche (53) des Ringkolbens (5) in bremsabgewandter Richtung axial abgesetzt ist.

3. Vorrichtung nach Anspruch 1, dadurch **gekennzeichnet,**
- daß die Klemmelemente (8) im Bereich einer innerhalb der Bohrung (41) der Gehäusestirnwand (4) angeordneten Umfangsnut (72) des Haltebolzens (7) allseitiges Radialspiel zum Nutengrund des Bolzens (7) aufweisen,
- wobei sie sich aber gegen die Wand der sie umschließenden Bohrung (41) aufspreizen und
- wobei die axiale Breite der Umfangsnut (72) der Breite des zugehörigen Klemmelementes (8) zuzüglich des Soll-Lüftspieles (L) entspricht.

4. Vorrichtung nach Anspruch 3, dadurch **gekennzeichnet,**
- daß die Anschlagsflächen (73, 74) als Seitenwände der Umfangsnut (72) ausgestaltet sind und
- die Länge der Bohrung (41) in der Gehäusestirnwand (4) größer ist als die axiale Breite des Klemmelementes (8) plus dem größten Hub des Kolbens (5).

5. Vorrichtung nach Anspruch 1, dadurch **gekennzeichnet,** daß die Haltebolzen (7) an ihrem reibscheibenseitigen Ende einen Schraubenkopf (75) aufweisen und in den Innenkragen (54) des Ringkolbens (5) eingeschraubt sind.

6. Vorrichtung nach Anspruch 5, dadurch **gekennzeichnet,** daß die reibscheibenseitige Innenfläche (57) des Innenkragens (54) um mindestens die Höhe des Schraubenkopfes (75) der Haltebolzen (7) gegenüber der Anlagefläche (53) axial abgesetzt ist.

7. Nachstellvorrichtung nach Anspruch 1, dadurch **gekennzeichnet,**
daß jedes der Klemmelemente (8) aus jeweils mindestens einem sichelförmigen Teilring besteht, dessen offene Ringbogenstrecke (81) mindestens auf eine dem Durchmesser des Bolzens (7) im Nutengrund der Umfangsnut (72) entsprechende Weite aufspreizbar ist.

8. Vorrichtung nach Anspruch 1, dadurch **gekennzeichnet,** daß entweder die Bohrungen (41) in der Gehäusestirnwand (4) nach außen sich etwa auf den Außendurchmesser der Klemmelemente (8) im ungespreizten Zustand erweiternde bremsenseitige Konusöffnungen (42) aufweisen oder die bremsenabgewandten Kanten von Bolzen (7) und Klemmelementen (8) entsprechende Montagefasen erhalten.

9. Vorrichtung nach Anspruch 1, dadurch **gekennzeichnet,** daß die Anzahl der zu den Haltebolzen (7) am Umfang des Ringkolbens (5) winkelversetzt angeordneten Rückstellfedern (9) größer als die der Haltebolzen (7) ist.

10. Vorrichtung nach Anspruch 1, dadurch **gekennzeichnet,** daß die Gehäusestirnwand (4) eine etwa halbkreisförmig um die Anlagefläche (53) herumgreifende Ringvertiefung (10) bildet, in welcher der Kolben (5) mit den Rändern der Wand (4) radial fluchtet.

11. Vorrichtung nach Anspruch 1, dadurch **gekennzeichnet,** daß die Reibscheiben (1) innen von einem Sonnenrad eines Planetengetriebes und außen von dessen Hohlrad (3) gehalten sind, das lösbar mit der als Hohlradträger gestalteten Gehäusestirnwand (4) verbunden ist.

## Claims

1. An adjusting device for operating pistons of hydraulically-operable and wet-running multidisc brakes or clutches, with a brake or clutch housing (2) and an annular piston (5), which is guided within said housing concentric to the axis of friction discs (1) and is arranged axially between a housing end wall (4) and the friction discs (1), thereby forming an annular cylinder (6), the annular piston (5) being radially enlarged by an inner collar (54) and being axially penetrated in bores (56) by holding bolts (7), which project into bores (41) in the housing end wall (4) and cooperate with clamping elements (8), which only allow the annular piston (5) a constant nominal release clearance (L) after brake or clutch actuation by means of an axial frictional connection with the holding bolts (7) with the association of two axially spaced abutment surfaces (73, 74), irrespective of the value of the effective sum of the thicknesses of all friction discs (1), the joint spring force of restoring springs (9) acting in the direction of the housing end wall (4) being less than the joint holding force of the clamping elements (8) relative to the housing (2), characterised in that the holding bolts (7) are axially rigidly secured with their end facing the friction discs to the inner collar (54) of the annular piston (5), the holding bolts (7) exhibit a circumferential clearance on all sides of their end facing the friction discs relative to the respective bore (41) in the housing end wall (4), which clearance is greater than the radial piston clearance, and the clamping element or elements (8) is/are arranged in the housing end wall (4) with outward expansion against the inner wall of the respective bore (41) in the region between two opposing abutment surfaces (73, 74) on the respective holding bolt (7).

2. A device according to claim 1, characterised in that an end face (57) of the inner collar (54) facing the friction discs is axially recessed relative to a bearing surface (53) of the annular piston (5) in the direction facing away from the brake.

3. A device according to claim 1, characterised in that, in the region of a circumferential groove (72) in the holding bolt (7) arranged within the bore (41) of the housing end wall (4), the clamping elements (8) exhibit radial clearance on all sides relative to the groove base of the bolt (7), but expand outwards against the wall of the bore (41) enclosing them, and the axial width of the circumferential groove (72) corresponds to the width of the associated clamping elements (8) including the nominal release clearance (L).

4. A device according to claim 3, characterised in that the abutment surfaces (73, 74) are formed as side walls of the circumferential groove (72), and the length of the bore (41) in the housing end wall (4) is greater than the axial width of the clamping element (8) plus the maximum stroke of the piston (5).

5. A device according to claim 1, characterised in that the holding bolts (7) comprise a screw head (75) at their end facing the friction discs and are screwed into the inner collar (54) of the annular piston (5).

6. A device according to claim 5, characterised in that the inner surface (57) of the inner collar (54) facing the friction discs is axially recessed relative to the bearing surface (53) by at least the height of the screw head (75) of the holding bolts (7).

7. An adjusting device according to claim 1, characterised in that each of the clamping elements (8) comprises at least one sickle-shaped partial ring, whose open arc section (81) can be expanded to a width at least corresponding to the diameter of the bolt (7) in the groove base of the circumferential groove (72).

8. A device according to claim 1, characterised in that either the bores (41) in the housing end wall (4) comprise brake-side conical openings (42) widening approximately to the external diameter of the clamping elements (8) in the non-expanded state, or the edges of the bolts (7) and clamping elements (8) facing away from the brake comprise corresponding assembly chamfers.

9. A device according to claim 1, characterised in that the number of restoring springs (9) arranged on the circumference of the annular piston (5) offset at angles to the holding bolts (7) is greater than the number of holding bolts (7).

10. A device according to claim 1, characterised in that the housing end wall (4) forms an annular recess (10) enclosing the bearing surface (53) approximately in the manner of a semi-circle, in which annular recess the piston (5) flushes radially with the edges of the wall (4).

11. A device according to claim 1, characterised in that the friction discs (1) are held on the inside by a sun wheel of planetary gearing and are held on the outside by the annular gear (3) thereof, which is releasably connected with the housing end wall (4) designed as an annular gear support.

## Revendications

1. Dispositif d'ajustage pour piston d'actionnement
- de freins/embrayages multidisques à fonctionnement hydraulique et à bain d'huile,
- avec un carter de freins/embrayages (2) et un piston annulaire (5) guidé dans ce carter de façon concentrique par rapport à l'axe des disques de friction (1),
- lequel piston annulaire est disposé, formant ainsi un cylindre annulaire (6), axialement entre une face de carter (4) et les disques de friction (1),
- sachant que le piston annulaire (5) est élargi dans le sens radial par un collet intérieur (54),
- et traversé dans le sens axial par des goujons de retenue (7) dans des perçages (56),
- lesquels goujons arrivent jusque dans les perçages (41) dans la face de carter (4) et agissent de façon combinée avec des éléments de blocage (8),
- qui ne permettent pour le piston annulaire (5), au moyen de la friction axiale relative aux goujons de retenue (7) sous positionnement de deux faces de butée (73, 74) avant un écartement axial, qu'un jeu de relâchement théorique (L) constant après un actionnement de frein/embrayage, et ce indépendamment de la valeur de la somme effective des épaisseurs de tous les disques de friction (1),
- sachant que l'effet commun des ressorts de rappel (9) agissant en direction de la face de carter (4) est plus faible que l'effet de retenue commun des éléments de blocage (8) en relation avec le carter,
**caractérisé** en ce que
- l'extrémité des goujons de retenue (7) tournée vers les disques de friction est fixée de façon rigide dans le sens axial sur le collet intérieur (54) du piston annulaire (5),
- les goujons de retenue (7) présentent sur l'extrémité opposée aux disques de friction par rapport aux perçages correspondants (41) dans la face de carter (4) partout un jeu circonférentiel plus important que le jeu radial du piston et que
- les/l'élément(s) de blocage (8) est/sont disposé(s) dans la face de carter (4) avec un élargissement extérieur contre la paroi intérieure du perçage correspondant (41) dans la zone comprise entre deux faces de butée (73, 74) en sens inverse sur le goujon de retenue correspondant (7).

2. Dispositif selon la revendication 1,
**caractérisé** en ce qu'une face frontale (57), côté disque de friction, du collet intérieur (54) est étagée dans le sens axial en direction opposée au frein/embrayage par une face de butée (53) du piston annulaire (5).

3. Dispositif selon la revendication 1,
**caractérisé** en ce que:
- les éléments de blocage (8) présentent dans la zone d'une rainure circonférentielle (72) du goujon de retenue (7) située à l'intérieur du perçage (41) de la face du carter (4) un jeu radial de tous côtés par rapport au fond de rainure du goujon (7),
- sachant qu'ils s'élargissent cependant, se bloquant ainsi contre la paroi de perçage (41) qui les entoure et
- sachant que la largeur axiale de la rainure circonférentielle (72) correspond à la somme de la largeur de l'élément de blocage (8) y appartenant et du jeu de relâchement théorique (L).

4. Dispositif selon la revendication 3,
**caractérisé** en ce que:
- les faces de butée (73, 74) sont conçues en tant que parois latérales de la rainure circonférentielle (72) et que
- la longueur du perçage (41) dans la face du carter (4) est plus important que la largeur axiale de l'élément de blocage (8) plus la course la plus importante du piston (5).

5. Dispositif selon la revendication 1,
**caractérisé** en ce que les goujons de retenue (7) présentent une tête de vis (75) à leur extrémité côté disque de friction et sont vissés dans le collet intérieur (54) du piston annulaire (5).

6. Dispositif selon la revendication 5,
**caractérisé** en ce que la face intérieure (57) côté disque de friction du collet intérieur (54) est étagée dans le sens axial d'au moins la hauteur de la tête de vis (75) des goujons de retenue (7) par rapport à la face de butée (53).

7. Dispositif d'ajustage selon la revendication 1,
**caractérisé** en ce que chaque élément de blocage (8) comporte au moins une bague divisée en forme de croissant dont le segment en arc annulaire (81) ouvert peut être élargi au moins sur une largeur correspondant au diamètre du perçage dans le fond de la rainure circonférentielle (72).

8. Dispositif selon la revendication 1,
**caractérisé** en ce que les perçages (41) dans la face du carter (4) présentent des ouvertures coniques (42) côté frein/embrayage s'agrandissant vers l'extérieur pour atteindre environ le diamètre extérieur des éléments de blocage (8) en l'absence d'écartement ou en ce que les arêtes des goujons (7) et éléments de blocage (8) opposées au frein/embrayage reçoivent des chanfreins de montage correspondants.

9. Dispositif selon la revendication 1,
**caractérisé** en ce que le nombre des ressorts de rappel (9) disposés avec un déport angulaire par rapport aux goujons de retenue (7) sur le pourtour du piston annulaire (5) est plus grand que celui des goujons de retenue (7).

10. Dispositif selon la revendication 1,
**caractérisé** en ce que la face du carter (4) forme un évidement annulaire (10) pratiquement en forme de demi-cercle autour de la face de butée (53) et dans lequel le piston (5) est aligné dans le sens radial avec les bords de la paroi (4).

11. Dispositif selon la revendication 1,
**caractérisé** en ce que les disques de friction (1) sont retenus à l'intérieur par un planétaire d'une boîte à train planétaire et à l'extérieur par sa couronne (3) qui est liée de façon amovible avec la face du carter (4) conçue en tant que porte-couronne.
